# EUROPEAN PATENT APPLICATION

(11) **EP 4 760 555 A1**
(43) Date of publication of application: **17.06.2026**
(21) Application number: 25217317.4
(22) Date of filing: 20.11.2025
(51) Int. Cl.: G06F 21/31, H04L 9/40

(54) **SYSTEMS AND METHODS FOR CALL CENTER AGENT VALIDATION**

(30) Priority: 10.12.2024 US 202418975417
(71) Applicant: JPMorgan Chase Bank, N.A., New York, NY 10179 (US)
(72) Inventor: VUDATHU, Raghu, New York, 10179 (US); GEAN, Gerardo, New York, 10179 (US); MADHAVAN, Suresh, New York, 10179 (US)
(74) Representative: Patentanwälte Olbricht Buchhold Keulertz

(57) **Abstract**

A method may include: receiving, by a computer program executed by an electronic device for a trusted entity, a notification from a call center agent computer program that a call center agent is making a voice call to a customer; receiving, by the computer program, a login from the customer via a trusted entity application executed by a customer electronic device or a trusted entity website; communicating, by the computer program, call context for the voice call to the customer electronic device; receiving, by the computer program, a code from the customer electronic device; communicating, by the computer program, the code to the call center agent computer program; and receiving, by the computer program, an indication from the trusted entity application or the trusted entity website whether the call context is proper and/or whether the call center agent properly provided the code in the voice call.

## Description

### BACKGROUND OF THE INVENTION

### 1. Field of the Invention

Embodiments relate to systems and methods for call center agent validation.

### 2. Description of the Related Art

Fraudsters often try to impersonate trusted entities to trick customers into disclosing sensitive account information that can be used to take over their accounts. These phishing attacks result in severe financial implications for the customers and the trusted entities.

### SUMMARY OF THE INVENTION

Systems and methods for call center agent validation are disclosed. According to an embodiment, a method may include: (1) receiving, by a computer program executed by an electronic device for a trusted entity, a notification from a call center agent computer program that a call center agent is making a voice call to a customer; (2) receiving, by the computer program, a login from the customer via a trusted entity application executed by a customer electronic device or a trusted entity website; (3) communicating, by the computer program, call context for the voice call to the customer electronic device; (4) receiving, by the computer program, a code from the customer electronic device; (5) communicating, by the computer program, the code to the call center agent computer program; and (6) receiving, by the computer program, an indication from the trusted entity application or the trusted entity website whether the call context is proper and/or whether the call center agent properly provided the code in the voice call.

In one embodiment, the indication further comprises a call center agent identifier, and the call context comprises information associated with the call center agent identifier.

In one embodiment, the call context comprises a time of the voice call, a duration of the voice call, and/or an identification of a number called.

In one embodiment, the code is entered by the customer and comprises numbers and/or letters.

In one embodiment, in response to receiving an indication that the call context is not proper and/or that the call center agent did not properly provide the code in the voice call: communicating, by the computer program, instructions to the trusted entity application for the customer to terminate the voice call; and determining, by the computer program, if any customer information for the customer has been compromised.

In one embodiment, the method may also include: collecting, by the computer program, information on the voice call in response to the call context being not proper and/or that the call center agent not properly providing the code in the voice call.

In one embodiment, the code is generated by the customer electronic device.

According to another embodiment, a system may include: a customer service backend for a trusted entity interfacing with a call center agent computer program, an application user interface, a validate call center agent user interface; and a customer electronic device for a customer executing a phone application and a trusted entity application. The customer service backend is configured to receive a notification from the call center agent computer program that a call center agent is making a voice call to the customer electronic device; the customer service backend is configured to receive a login from the customer via the trusted entity application; the customer service backend is configured to communicate call context for the voice call to the trusted entity application; the customer service backend is configured to receive a code from the customer electronic device; the customer service backend is configured to communicate the code to the call center agent computer program, wherein a call center agent reads the code to the customer over the voice call; and the customer service backend is configured to receive an indication from the customer electronic device whether the call context is proper and/or whether the call center agent properly provided the code in the voice call.

In one embodiment, the indication further comprises a call center agent identifier, and the call context comprises information associated with the call center agent identifier.

In one embodiment, the call context comprises a time of the voice call, a duration of the voice call, and/or an identification of a number called.

In one embodiment, the code is entered by the customer and comprises numbers and/or letters.

In one embodiment, in response to receiving an indication that the call context is not proper and/or that the call center agent did not properly provide the code in the voice call, the customer service backend is configured to communicate instructions to the trusted entity application for the customer to terminate the voice call; and to determine if any customer information for the customer has been compromised.

In one embodiment, the customer service backend is configured to collect information on the voice call in response to the call context being not proper and/or that the call center agent not properly providing the code in the voice call.

In one embodiment, the code is generated by the customer electronic device.

According to another embodiment, a non-transitory computer readable storage medium, may include instructions stored thereon, which when read and executed by one or more computer processors, cause the one or more computer processors to perform steps comprising: receiving a notification from a call center agent computer program that a call center agent is making a voice call to a customer; receiving a login from the customer via a trusted entity application executed by a customer electronic device or a trusted entity website; communicating call context for the voice call to the customer electronic device; receiving a code from the customer electronic device; communicating the code to the call center agent computer program; and receiving an indication from the customer electronic device whether the call context is proper and/or whether the call center agent properly provided the code in the voice call.

In one embodiment, the indication further comprises a call center agent identifier, and the call context comprises information associated with the call center agent identifier.

In one embodiment, the call context comprises a time of the voice call, a duration of the voice call, and/or an identification of a number called.

In one embodiment, the code is entered by the customer and comprises numbers and/or letters.

In one embodiment, the non-transitory computer readable storage medium may also include instructions stored thereon, which when read and executed by the one or more computer processors, in response to receiving an indication that, in response to the call context is not proper and/or that the call center agent did not properly provide the code in the voice call, cause the one or more computer processors to perform steps comprising communicating instructions to the trusted entity application or the trusted entity website for the customer to terminate the voice call, and determining if any customer information for the customer has been compromised.

In one embodiment, the non-transitory computer readable storage medium may also include instructions stored thereon, which when read and executed by the one or more computer processors, cause the one or more computer processors to perform steps comprising: collecting information on the voice call in response to the call context being not proper and/or that the call center agent not properly providing the code in the voice call.

### BRIEF DESCRIPTION OF THE DRAWINGS

For a more complete understanding of the present invention, the objects and advantages thereof, reference is now made to the following descriptions taken in connection with the accompanying drawings in which:
Figure 1 depicts a system for call center agent validation according to an embodiment;
Figure 2 depicts a method for call center agent validation according to an embodiment;
Figure 3 depicts an exemplary computing system for implementing aspects of the present disclosure.

### DETAILED DESCRIPTION OF PREFERRED EMBODIMENTS

Embodiments relate to systems and methods for call center agent validation.

In embodiments, before or concurrently with making a voice call to a customer, a call center representative for a trusted entity (e.g., a financial institution) may log into a servicing system with his or her credentials. When the customer receives the voice call purporting to be from the trusted entity, the customer may access an interface in a mobile application or website for the trusted entity, and may receive a message that the customer is currently on the phone with the call center representative. Information for the call center representative, such as the call center representative's name, or other identifier that uniquely identifies the customer service agent, may be provided. In addition, information regarding the voice call, such as the duration of the voice call, when the voice call was initiated, the number called, etc., may be provided.

In one embodiment, the customer may dynamically enter text, a number, a phrase, etc. and submit that entry into the interface for the trusted entity system (mobile application or website) the customer logged in, without disclosing the text / number / phrase verbally to the call center representative of the phone. Alternatively, the trusted entity's mobile application or website may generate random text, numbers, etc. to submit to the backend system that is delivered to the call center representative. Whatever means the text, a number, a phrase, etc. is submitted to the trusted entities system, the customer never shares the text, a number, a phrase, etc. with the customer service agent directly or verbally. It is only the customer service agent who reads out the text, a number, a phrase, etc. verbally with the customer.

The call center representative may receive and read the text, number, phrase, etc. and/or number to the customer over the voice call, and the customer may verify that the text, number, phrase, etc. that is read by the call center representative is the same as that which was submitted. If they match, the customer may be confident that the voice call is not with a fraudster.

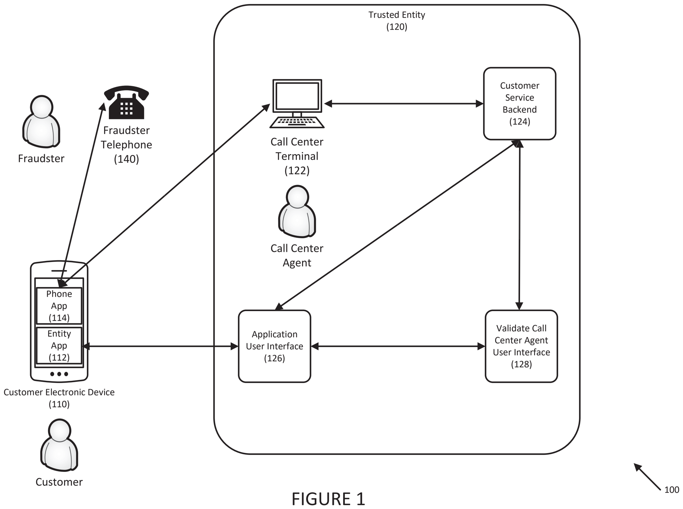

Referring to Figure 1, a system for call center agent validation is disclosed according to an embodiment. System 100 may include a customer having customer electronic device 110. Customer electronic device 110 may be a computer (e.g., desktop, laptop, notebook, tablet, etc.), a smart device (e.g., a smart watch, a smart phone, etc.), an Internet of Things (IoT) appliance, etc.

In one embodiment, the customer may have two devices, such as a computer and a telephone.

System 100 may further include trusted entity 120, such as the customer's financial institution. Trusted entity 120 may employ one or more call center agents, and each call center agent may use call center terminal 122.

Call center terminal 122 may interface with customer service backend 124. Customer service backend 124 may access records for the customer, including the customer's phone number, and may provide that information to call center terminal 122.

Call center terminal 122 may also conduct a voice call to customer electronic device 110 using, for example, phone app 114. In another embodiment, call center terminal 122 may call a stand-alone telephone associated with the customer. In another embodiment, instead of call center terminal 122 making the voice call, a telephone system may make the voice call.

When the customer receives the voice call, the customer may access application user interface 126 via entity application 112 executed by customer electronic device 110. In another embodiment, the customer may browse to a website for trusted entity 120 to access application user interface 126 using a browser (not shown) executed by customer electronic device 110.

In one embodiment, the customer may log in to trusted entity 120's application 112 using, for example, username and password, biometrics, etc. Similarly, the customer may log in to trusted entity 120's website using a username and password.

Once logged in, application user interface 126 may present details on the current voice call with the call center agent to the customer. For example, the details may include the call center agent's name or an identifier that uniquely identifies the call center agent, the time of the voice call, a running duration of the voice call, the phone number that was called, and any other information that is necessary and/or desired.

Using application user interface 126, the customer may access validate call center agent user interface 128, which may allow the user to generate and/or enter a code to be communicated to the call center agent via the customer service backend system 124 to the call center terminal 122. For example, the customer may enter numbers and/or characters, and those numbers and/or characters may be communicated to the call center agent via customer service backend 124. In another embodiment, validate call center agent user interface 128 may generate and display a code for the customer, and may submit the code to the call center agent.

Once the call center agent receives the code, the call center agent may read the code to the customer over the voice call. If the codes match, then the customer can be confident that the caller is an employee or agent of trusted entity 120, and the voice call is not a phishing call.

If the codes do not match, indicating that a fraudster may be calling the customer using fraudster telephone 140, the customer may hang up the voice call, and may inform trusted entity 120 via application user interface of the phishing attempt. Trusted entity 120 may then take appropriate fraud-related actions.

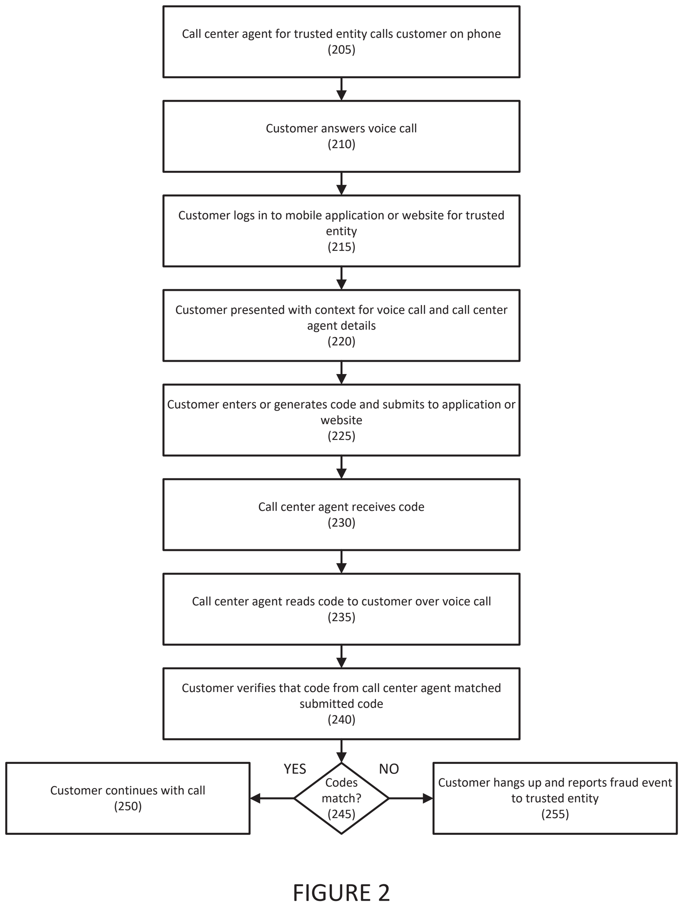

Referring to Figure 2, a method for call center agent validation is disclosed according to an embodiment.

In step 205, a call center agent for a trusted entity may make a voice call to a customer on a telephone line. The voice call may be in response to a fraud event, or it may be a periodic voice call.

In step 210, the customer may answer the voice call using, for example, a telephone, a smart device (e.g., smart phone), etc.

In step 215, the call center agent may instruct the customer to log in to the trusted entity's mobile application or website to verify that the customer is speaking with a trusted entity employee or agent. The customer may then log in to the trusted entity mobile application or the trusted entity website. The customer may log in using, for example, a username and password, a biometric, etc.

In step 220, once logged in, the mobile application or website may present the customer with context for voice call and call center agent details. For example, the customer may be presented with the voice call center agent's name or agent identifier, the duration of the voice call, the time at which the voice call was initiated, etc.

In step 225, the customer may be presented with a validate call center agent user interface to enter or generate a code that will be transmitted to the call center agent. In one embodiment, the customer may enter a code comprising digits, letters, words, etc., or may have a code generated on the customer's behalf. The code may be displayed on the customer's electronic device.

In step 230, the validate call center agent user interface may communicate the code to the call center agent, and in step 235, the call center agent may read the code to the customer over the voice call.

In step 240, the customer may compare the code that was read by the call center agent to the code that was entered or generated. If, in step 245, the codes match, in step 250, the customer can be confident that the caller is an employee or agent of the trusted entity, and the voice call is not a phishing call.

The customer may optionally confirm that codes matched in the validate call center agent user interface.

In one embodiment, after the customer acknowledges that the codes match, the call center agent may record the result. For example, the call center agent may click on a button or similar when in response the customer confirming the match. The customer may take a similar action in the validate call center agent user interface, which confirms the accuracy by both parties.

The trusted entity mobile application or the trusted entity website may display an icon or indicator indicating that the current call has been validated. The call center agent may be presented with a similar icon or indicator.

In another embodiment, a message (e.g., a text message, a push message, etc.) may be sent to the customer's mobile electronic device as confirmation.

If the codes do not match, indicating that a fraudster may be calling the customer, in step 255, the customer may hang up the voice call, and may inform trusted entity of a fraud event. The trusted entity may then take appropriate fraud-related actions.

In one embodiment, the customer may report the event to the trusted entity using the validate call center agent user interface, and the trusted entity may then gather information to determine if any information was compromised. For example, the trusted entity may review the customer's profile and/or any recent transactions involving the customer's account to see if any information was recently changed, to see if any customer information has been accessed and by whom, etc.

For example, as discussed above, if one of the call center agents or the customer do not indicate the match in their respective user interfaces (e.g., by clicking on a button or similar indicating that the codes do not match, or after the expiration of a certain amount of time), the validate call center agent user interface and/or the call center agent interface may record information that may be available, such as the IP addresses of the devices, the cell network provider from the cell tower, source phone numbers, target phone number, time and duration of the call, mac id of the device, customer details, etc. from that call with the customer consent. The trusted entity may report an incident to a fraud agent along with all the information collected and then terminate the call. This event may be audited for future reference.

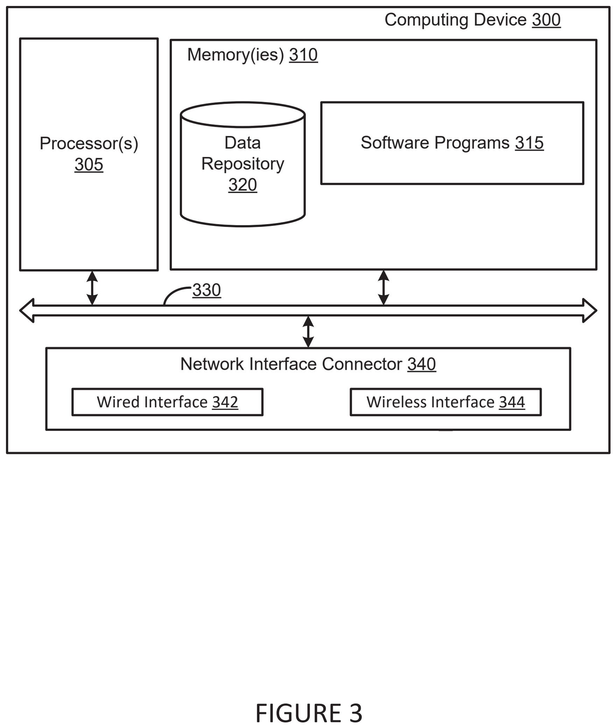

Figure 3 depicts an exemplary computing system for implementing aspects of the present disclosure. Figure 3 depicts exemplary computing device 300. Computing device 300 may represent the system components described herein. Computing device 300 may include processor 305 that may be coupled to memory 310. Memory 310 may include volatile memory. Processor 305 may execute computer-executable program code stored in memory 310, such as software programs 315. Software programs 315 may include one or more of the logical steps disclosed herein as a programmatic instruction, which may be executed by processor 305. Memory 310 may also include data repository 320, which may be nonvolatile memory for data persistence. Processor 305 and memory 310 may be coupled by bus 330. Bus 330 may also be coupled to one or more network interface connectors 340, such as wired network interface 342 or wireless network interface 344. Computing device 300 may also have user interface components, such as a screen for displaying graphical user interfaces and receiving input from the user, a mouse, a keyboard and/or other input/output components (not shown).

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope. Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method, comprising:
receiving, by a computer program executed by an electronic device for a trusted entity, a notification from a call center agent computer program that a call center agent is making a voice call to a customer;
receiving, by the computer program, a login from the customer via a trusted entity application executed by a customer electronic device or a trusted entity website;
communicating, by the computer program, call context for the voice call to the customer electronic device;
receiving, by the computer program, a code from the customer electronic device;
communicating, by the computer program, the code to the call center agent computer program; and
receiving, by the computer program, an indication from the trusted entity application or the trusted entity website whether the call context is proper and/or whether the call center agent properly provided the code in the voice call.

2. The method of claim 1, wherein the indication further comprises a call center agent identifier, and the call context comprises information associated with the call center agent identifier.

3. The method of claim 1, wherein the call context comprises a time of the voice call, a duration of the voice call, and/or an identification of a number called.

4. The method of claim 1, wherein the code is entered by the customer and comprises numbers and/or letters.

5. The method of claim 1, wherein in response to receiving an indication that the call context is not proper and/or that the call center agent did not properly provide the code in the voice call:
communicating, by the computer program, instructions to the trusted entity application for the customer to terminate the voice call; and
determining, by the computer program, if any customer information for the customer has been compromised.

6. The method of claim 1, further comprising:
collecting, by the computer program, information on the voice call in response to the call context being not proper and/or that the call center agent not properly providing the code in the voice call.

7. The method of claim 1, wherein the code is generated by the customer electronic device.

8. A system, comprising:
a customer service backend for a trusted entity interfacing with a call center agent computer program, an application user interface, and a validate call center agent user interface; and
a customer electronic device for a customer executing a phone application and a trusted entity application;
wherein:
the customer service backend is configured to receive a notification from the call center agent computer program that a call center agent is making a voice call to the customer electronic device;
the customer service backend is configured to receive a login from the customer via the trusted entity application;
the customer service backend is configured to communicate call context for the voice call to the trusted entity application;
the customer service backend is configured to receive a code from the customer electronic device;
the customer service backend is configured to communicate the code to the call center agent computer program, wherein a call center agent reads the code to the customer over the voice call; and
the customer service backend is configured to receive an indication from the customer electronic device whether the call context is proper and/or whether the call center agent properly provided the code in the voice call.

9. The system of claim 8, wherein the indication further comprises a call center agent identifier, and the call context comprises information associated with the call center agent identifier.

10. The system of claim 8, wherein the call context comprises a time of the voice call, a duration of the voice call, and/or an identification of a number called.

11. The system of claim 8, wherein the code is entered by the customer and comprises numbers and/or letters.

12. The system of claim 8, wherein in response to receiving an indication that the call context is not proper and/or that the call center agent did not properly provide the code in the voice call, the customer service backend is configured to communicate instructions to the trusted entity application for the customer to terminate the voice call; and to determine if any customer information for the customer has been compromised.

13. The system of claim 8, wherein the customer service backend is configured to collect information on the voice call in response to the call context being not proper and/or that the call center agent not properly providing the code in the voice call.

14. The system of claim 8, wherein the code is generated by the customer electronic device.

15. A non-transitory computer readable storage medium, including instructions stored thereon, which when read and executed by one or more computer processors, cause the one or more computer processors to perform steps comprising:
receiving a notification from a call center agent computer program that a call center agent is making a voice call to a customer;
receiving a login from the customer via a trusted entity application executed by a customer electronic device or a trusted entity website;
communicating call context for the voice call to the customer electronic device;
receiving a code from the customer electronic device;
communicating the code to the call center agent computer program; and
receiving an indication from the customer electronic device whether the call context is proper and/or whether the call center agent properly provided the code in the voice call.

16. The non-transitory computer readable storage medium of claim 15, wherein the indication further comprises a call center agent identifier, and the call context comprises information associated with the call center agent identifier.

17. The non-transitory computer readable storage medium of claim 15, wherein the call context comprises a time of the voice call, a duration of the voice call, and/or an identification of a number called.

18. The non-transitory computer readable storage medium of claim 15, wherein the code is entered by the customer and comprises numbers and/or letters.

19. The non-transitory computer readable storage medium of claim 15, including instructions stored thereon, which when read and executed by the one or more computer processors, in response to receiving an indication that, in response to the call context is not proper and/or that the call center agent did not properly provide the code in the voice call, cause the one or more computer processors to perform steps comprising communicating instructions to the trusted entity application or the trusted entity website for the customer to terminate the voice call, and determining if any customer information for the customer has been compromised.

20. The non-transitory computer readable storage medium of claim 15, further including instructions stored thereon, which when read and executed by the one or more computer processors, cause the one or more computer processors to perform steps comprising:
collecting information on the voice call in response to the call context being not proper and/or that the call center agent not properly providing the code in the voice call.
